# EUROPEAN PATENT APPLICATION

(11) **EP 4 640 602 A1**
(43) Date of publication of application: **29.10.2025**
(21) Application number: 23906339.9
(22) Date of filing: 26.07.2023
(51) Int. Cl.: B65G 65/40, B33Y 30/00, B33Y 50/02, B29C 64/255, B29C 64/329, B29C 64/343, B29C 64/393, B22F 12/50, B22F 12/52, B22F 12/53

(54) **POWDER SUPPLY DEVICE**

(30) Priority: 22.12.2022 JP 2022205159
(71) Applicant: EBARA CORPORATION, Ota-ku, Tokyo 144-8510 (JP)
(72) Inventor: ASAI, Junki, Tokyo 144-8510 (JP); SHINOZAKI, Hiroyuki, Tokyo 144-8510 (JP)
(74) Representative: Wimmer, Hubert
(86) International application number: PCT/JP2023/027310
(87) International publication number: WO 2024/134955

(57) **Abstract**

There is provided a technique capable of easily adjusting the amount of powder to be discharged through a discharge port of a powder supply apparatus.

A powder supply apparatus 30 includes: a storage member 31 including a storage chamber 38; a discharging member 33 including a discharge port 39 to discharge powder; a feeding member 32 disposed below the storage member and above the discharging member, configured to feed powder in the storage chamber to the discharge port, and including a plurality of feeding chambers 40, 41 having capacities different from one another inside the feeding member such that the plurality of feeding chambers are stacked in an up-down direction; an inlet shutter 34 configured to open and close an inlet opening 42 for feeding the powder in the storage chamber to the feeding member; an outlet shutter 35 configured to open and close an outlet opening 43 for feeding powder in the feeding member to the discharge port; and an intermediate shutter 36 configured to open and close an intermediate opening 44 to make one feeding chamber and another feeding chamber included in the plurality of feeding chambers and adjacent to each other communicate with each other.

## Description

### TECHNICAL FIELD

The present invention relates to a powder supply apparatus. The present application claims priority based on Japanese Patent Application No. 2022-205159 filed on Dec. 22, 2022. The entire disclosure including the description, the claims, the drawings, and the abstract of Japanese Patent Application No. 2022-205159 is incorporated herein by reference in its entirety.

### BACKGROUND ART

Conventionally, powder supply apparatuses capable of supplying powder have been known. As such a powder supply apparatus, for example, a powder supply apparatus applied to an additive manufacturing apparatus is known (e.g., see PTL 1 and PTL 2). Specifically, such a powder supply apparatus is configured to supply powder to a fabrication area of an additive manufacturing apparatus.

### CITATION LIST

### PATENT LITERATURE

PTL 1: Japanese Patent Application Laid-Open Publication No. 2021-181211
PTL 2: Japanese Patent Application Laid-Open Publication No. 2022-144848

### SUMMARY OF INVENTION

### TECHNICAL PROBLEM

However, such a conventional powder supply apparatus has room for improvement with respect to the ease of adjustment of the amount of powder to be discharged through a discharge port of the powder supply apparatus.

The present invention has been made in view of the circumstances described above, and one object of the present invention is to provide a technique capable of easily adjusting the amount of powder to be discharged through a discharge port of a powder supply apparatus.

### SOLUTION TO PROBLEM

### (Aspect 1)

In order to achieve the object described above, a powder supply apparatus according to an aspect of the present invention includes: a storage member including a storage chamber configured to store powder; a discharging member disposed below the storage member and including a discharge port to discharge the powder; a feeding member disposed below the storage member and above the discharging member, configured to feed powder in the storage chamber to the discharge port, and including a plurality of feeding chambers inside the feeding member such that the plurality of feeding chambers are stacked in an up-down direction, the plurality of feeding chambers having capacities different from one another; an inlet shutter configured to open and close an inlet opening for feeding the powder in the storage chamber to the feeding member; an outlet shutter configured to open and close an outlet opening for feeding powder in the feeding member to the discharge port; and an intermediate shutter configured to open and close an intermediate opening that makes one feeding chamber and another feeding chamber communicate with each other, the one feeding chamber and the other feeding chamber being included in the plurality of feeding chambers and being adjacent to each other.

With this configuration, the amount of powder to be discharged through the discharge port of the powder supply apparatus can be easily adjusted by opening and closing the inlet shutter, the outlet shutter, and the intermediate shutter separately.

### (Aspect 2)

Aspect 1 described above may include a controller configured to control operation of opening and closing the inlet shutter, the outlet shutter, and the intermediate shutter, wherein the controller may control the inlet shutter, the outlet shutter, and the intermediate shutter such that, after a charging chamber is charged with the powder in the storage chamber, powder in a discharging chamber is discharged through the discharge port, the charging chamber being at least one feeding chamber selected from among the plurality of feeding chambers, the discharging chamber being at least one feeding chamber selected from among the charging chamber.

### (Aspect 3)

In Aspect 2 described above, in a case where the charging chamber is to be charged with the powder in the storage chamber, the controller may charge the charging chamber with the powder in the storage chamber by opening the inlet shutter, closing the outlet shutter, and opening or closing the intermediate shutter to make the storage chamber and the charging chamber communicate with each other, and in a case where the powder in the discharging chamber is to be discharged through the discharge port, the controller may discharge the powder in the discharging chamber through the discharge port by closing the inlet shutter, opening the outlet shutter, and opening or closing the intermediate shutter to make the discharging chamber and the discharge port communicate with each other.

### (Aspect 4)

In Aspect 3 described above, the plurality of feeding chambers may include a first feeding chamber and a second feeding chamber, the second feeding chamber being adjacent to the first feeding chamber and being disposed below the first feeding chamber, and the controller may control the inlet shutter, the outlet shutter, and the intermediate shutter such that the powder is discharged through the discharge port in one discharge amount selected from among a first amount, a second amount, and a third amount, the second amount being smaller than the first amount, the third amount being smaller than the second amount.

According to this aspect, it is possible to discharge the powder through the discharge port of the powder supply apparatus in one discharge amount selected from among the first amount, the second amount, and the third amount.

### (Aspect 5)

In Aspect 4 described above, a capacity of the first feeding chamber may be smaller than a capacity of the second feeding chamber, in a case where the first amount is set as an amount of powder to be discharged through the discharge port, the controller may make the first feeding chamber and the second feeding chamber serve as the charging chamber and the discharging chamber, in a case where the second amount is set as the amount of the powder to be discharged through the discharge port, the controller may make the first feeding chamber and the second feeding chamber serve as the charging chamber and make the second feeding chamber serve as the discharging chamber, and in a case where the third amount is set as the amount of the powder to be discharged through the discharge port, the controller may make the first feeding chamber serve as the charging chamber and the discharging chamber.

### (Aspect 6)

In Aspect 4 described above, a capacity of the first feeding chamber may be larger than a capacity of the second feeding chamber, in a case where the first amount is set as an amount of powder to be discharged through the discharge port, the controller may make the first feeding chamber and the second feeding chamber serve as the charging chamber and the discharging chamber, in a case where the second amount is set as the amount of the powder to be discharged through the discharge port, the controller may make the first feeding chamber serve as the charging chamber and the discharging chamber, and in a case where the third amount is set as the amount of the powder to be discharged through the discharge port, the controller may make the first feeding chamber and the second feeding chamber serve as the charging chamber and make the second feeding chamber serve as the discharging chamber.

### (Aspect 7)

In any one of Aspects 1 to 6 described above, the powder supply apparatus may be configured to be applied to an additive manufacturing apparatus including a fabrication area and to supply the powder to the fabrication area, the fabrication area being a fabrication area in which a three-dimensional object is to be fabricated.

### BRIEF DESCRIPTION OF DRAWINGS

Fig. 1A and Fig. 1B are schematic diagrams for describing an additive manufacturing apparatus according to an embodiment.
Fig. 2 is a schematic diagram illustrating a key configuration of a powder supply apparatus according to the embodiment.
Fig. 3A and Fig. 3B are sectional views each schematically illustrating the internal configuration of the powder supply apparatus according to the embodiment.
Fig. 4 is a schematic plan view of parts of an inlet shutter, an outlet shutter, and an intermediate shutter according to the embodiment.
Fig. 5 is a schematic diagram for describing an additive manufacturing apparatus according to Modification 2 of the embodiment.

### DESCRIPTION OF EMBODIMENTS

### (Embodiment)

An Embodiment of the present invention will be described below with reference to the drawings. The drawings give schematic illustrations for ease of understanding features, and therefore, the dimensional ratios and the like of constituent components are not necessarily the same as those of actual constituent components. In the drawings, X-Y-Z Cartesian coordinates are illustrated as necessary. In the Cartesian coordinates, a Z direction corresponds to an upward direction, and a -Z direction corresponds to a downward direction (the direction in which gravity acts).

As one example, a powder supply apparatus 30 according to the present embodiment is applied to an additive manufacturing apparatus 1 (an additive manufacturing apparatus (an "AM apparatus")) that is configured to stack material to fabricate a three-dimensional object. First, an overview of the additive manufacturing apparatus 1 will be described, and next, the powder supply apparatus 30 will be described in detail.

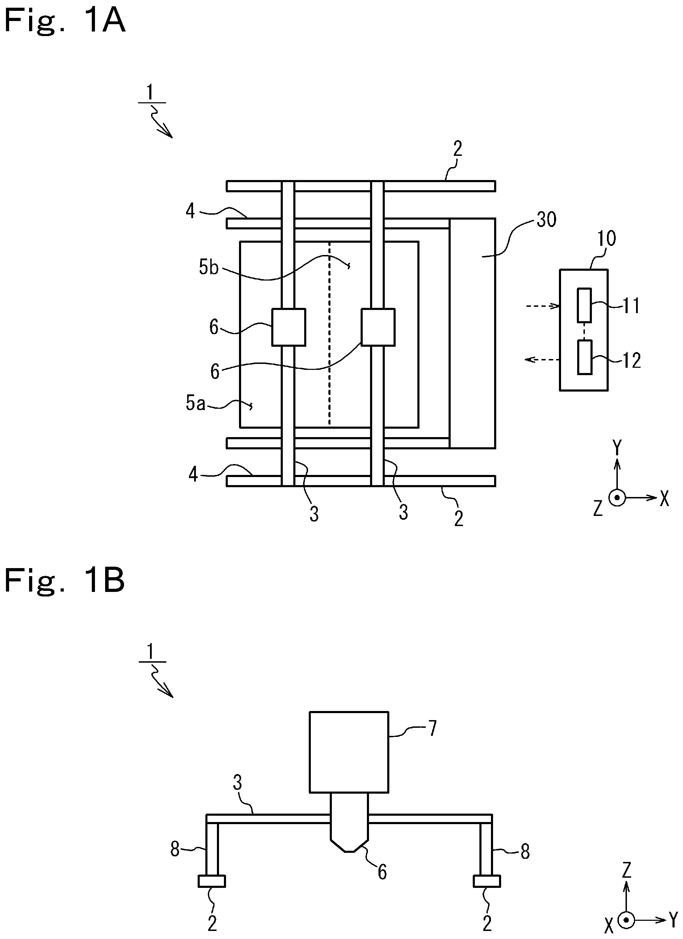

Fig. 1A and Fig. 1B are schematic diagrams for describing the additive manufacturing apparatus 1 according to the present embodiment. Specifically, Fig. 1A is a plan view schematically illustrating a key configuration of the additive manufacturing apparatus 1, and Fig. 1B is a front view schematically illustrating a peripheral configuration of a nozzle 6 described later of the additive manufacturing apparatus 1. Note that, in Fig. 1A, the illustration of material suppliers 7 described later is omitted.

Referring to Fig. 1A and Fig. 1B, the additive manufacturing apparatus 1 includes first traveling shafts 2, second traveling shafts 3, a fabrication area (a fabrication area 5a and a fabrication area 5b), the nozzles 6, the material suppliers 7, a controller 10, and the powder supply apparatus 30.

The controller 10 is a device for integrally controlling the operation of the additive manufacturing apparatus 1. Specifically, the controller 10 according to the present embodiment includes a microcomputer. The microcomputer includes a processor 11, a storage 12 as a non-transitory storage medium, and the like. The controller 10 controls the operation of the additive manufacturing apparatus 1 with the processor 11 operating in accordance with instructions in a program stored in the storage 12. Note that, in the controller 10, a functional part for controlling the powder supply apparatus 30 described later is included in some of constituent components of the powder supply apparatus 30.

The fabrication area is an area where the three-dimensional object is fabricated. As one example, the additive manufacturing apparatus 1 according to the present embodiment includes a plurality of fabrication areas (specifically, the fabrication area 5a and the fabrication area 5b as one example).

The first traveling shafts 2 extend in a given direction (an X direction in the present embodiment). The second traveling shafts 3 extend in a direction perpendicular to the first traveling shafts 2 (a Y direction in the present embodiment). As one example, the additive manufacturing apparatus 1 according to the present embodiment includes a plurality of second traveling shafts 3 (two second traveling shafts 3 as one example).

Referring to Fig. 1B, the second traveling shafts 3 are connected to the first traveling shafts 2 via leg members 8. The first traveling shafts 2 include, for example, a drive mechanism including a ball screw. The drive mechanism causes the second traveling shafts 3 to travel in the X direction and a -X direction.

Referring to Fig. 1B, the material suppliers 7 are devices for supplying the nozzles 6 with material for the three-dimensional object. As one example, the material suppliers 7 according to the present embodiment are disposed above the respective nozzles 6. As one example, the material suppliers 7 according to the present embodiment supply the nozzles 6 with material in a non-molten state (specifically, material in powder form).

The nozzles 6 are configured to eject the material for the three-dimensional object into the fabrication areas 5a and 5b and irradiate the ejected material with a beam (a laser beam or an electron beam) to melt the material. As the melted material solidifies, the three-dimensional object is fabricated in the fabrication areas 5a and 5b. Note that the nozzles 6 are preferably configured to jet a shielding gas (an inert gas) for inhibiting the oxidation of the material when applying the beam. As such nozzles 6, what is called "directed energy deposition (DED) nozzles" can be used.

As one example, the additive manufacturing apparatus 1 according to the present embodiment includes a plurality of nozzles 6 (as one example, two nozzles 6 in the present embodiment). Of the two nozzles 6, one nozzle 6 is provided to fabricate the three-dimensional object in the fabrication area 5a, and the other nozzle 6 is provided to fabricate the three-dimensional object in the fabrication area 5b.

The plurality of nozzles 6 are each disposed on the second traveling shaft 3. The second traveling shafts 3 include, for example, a drive mechanism including a ball screw. The drive mechanism causes the nozzles 6 to travel in the Y direction and a -Y direction. As mentioned above, since the second traveling shafts 3 can travel in the X direction and the -X direction, the nozzles 6 according to the present embodiment can travel in the X direction, the -X direction, the Y direction, and the -Y direction.

Note that, in Fig. 1A and Fig. 1B, one nozzle 6 is disposed on one second traveling shaft 3. However, the nozzle 6 is not limited to this configuration. A plurality of nozzles 6 may be disposed on one second traveling shaft 3.

The additive manufacturing apparatus 1 as described above fabricates the three-dimensional object in the fabrication areas 5a and 5b while causing the nozzles 6 to travel in the X direction, the -X direction, the Y direction, and the -Y direction on the basis of three-dimensional data stored in the controller 10.

Note that the additive manufacturing apparatus 1 may further include lifting shafts configured to raise or lower the fabrication areas 5a and 5b or the first traveling shafts 2. In this case, it is possible to fabricate the three-dimensional object while the nozzles 6 are raised or lowered (while the nozzles 6 are further displaced in a Z direction or a -Z direction) with respect to the fabrication areas 5a and 5b.

The above-mentioned configuration of the additive manufacturing apparatus 1 excluding the powder supply apparatus 30 is the same as the configuration of a known additive manufacturing apparatus as disclosed in PTL 1 and PTL 2 mentioned above. Thus, the configuration of the additive manufacturing apparatus 1 excluding the powder supply apparatus 30 will not be further described.

As one example, the powder supply apparatus 30 according to the present embodiment is applied to the above-mentioned additive manufacturing apparatus 1. Specifically, referring to Fig. 1A, the powder supply apparatus 30 according to the present embodiment is disposed on third traveling shafts 4 extending parallel to the first traveling shafts 2 as one example. The third traveling shafts 4 include, for example, a drive mechanism including a ball screw. The drive mechanism causes the powder supply apparatus 30 to travel in the X direction and the -X direction.

The powder supply apparatus 30 according to the present embodiment has a function as an auxiliary material supplier in the additive manufacturing apparatus 1. Specifically, the powder supply apparatus 30 is configured to supply powder as the material for the three-dimensional object to the fabrication areas 5a and 5b by means of the action of gravity while the powder remains as it is without melting it. More specifically, when the powder is supplied to the fabrication areas 5a and 5b, the powder supply apparatus 30 travels along the third traveling shafts 4 to be positioned above the fabrication areas 5a and 5b and then supplies the powder toward the fabrication areas 5a and 5b by means of the action of gravity.

The powder supply apparatus 30 according to the present embodiment supplies, during a given period, the powder to the fabrication areas 5a and 5b to lay the powder on the fabrication areas 5a and 5b. To give one example of this, the powder supply apparatus 30 may lay the powder on the fabrication areas 5a and 5b every time the additive manufacturing apparatus 1 fabricates one layer of the three-dimensional object.

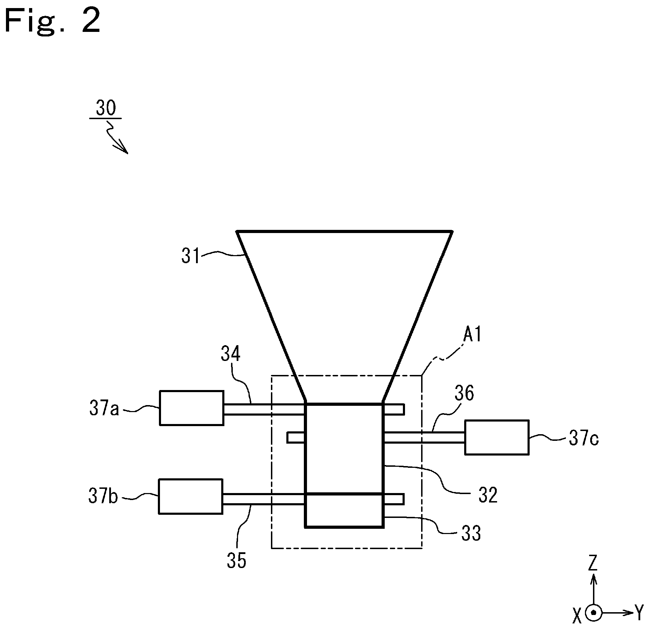

Next, the powder supply apparatus 30 will be described in detail. Fig. 2 is a schematic diagram illustrating a key configuration of the powder supply apparatus 30 according to the present embodiment. The powder supply apparatus 30 includes a storage member 31, a feeding member 32, a discharging member 33, shutters (an inlet shutter 34, an outlet shutter 35, and an intermediate shutter 36), and drivers (a driver 37a, a driver 37b, and a driver 37c).

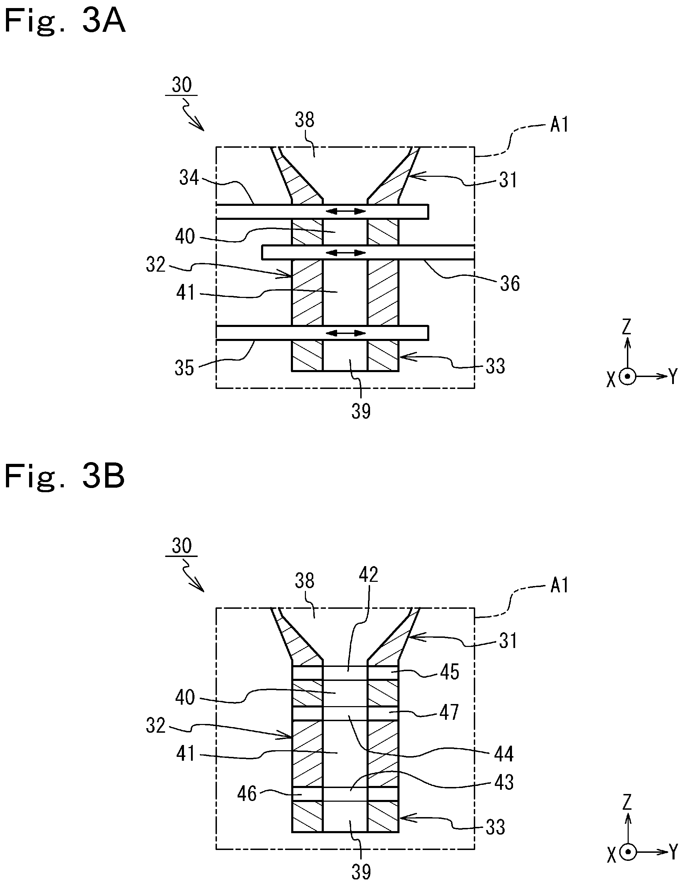

Fig. 3A and Fig. 3B are sectional views each schematically illustrating the internal configuration of the powder supply apparatus 30. Specifically, Fig. 3A schematically illustrates the inside of a "surrounding region of the feeding member 32 (an "A1 region")" of the powder supply apparatus 30 in the state where the inlet shutter 34, the intermediate shutter 36, and the outlet shutter 35 are disposed. Meanwhile, Fig. 3B schematically illustrates the inside of the "A1 region" of the powder supply apparatus 30 in the state where the inlet shutter 34, the intermediate shutter 36, and the outlet shutter 35 are removed.

Referring to Fig. 2, Fig. 3A, and Fig. 3B, the storage member 31 includes a storage chamber 38 that stores powder. Although the specific configuration of the storage chamber 38 is not particularly limited, the storage chamber 38 according to the present embodiment is configured such that its diameter decreases toward a lower part as one example. As the storage member 31, what is called a hopper can be used.

The material of the powder stored in the storage chamber 38 is not particularly limited. The material may be a metal or a nonmetal. Note that, in the present embodiment, the material of the powder stored in the storage chamber 38 is the same as the material of the three-dimensional object to be fabricated by the additive manufacturing apparatus 1.

The discharging member 33 is disposed below the feeding member 32 described later. The discharging member 33 includes a discharge port 39 to discharge the powder. That is, the discharge port 39 has a function as a "powder supply port" of the powder supply apparatus 30.

The feeding member 32 is disposed below the storage member 31 and above the discharging member 33 (i.e., disposed between the storage member 31 and the discharging member 33). The feeding member 32 is configured to feed the powder stored in the storage chamber 38 of the storage member 31 to the discharge port 39 of the discharging member 33.

The feeding member 32 is internally provided with a plurality of feeding chambers. The feeding chambers have mutually different capacities (m³). The plurality of feeding chambers are provided to be stacked in an up-down direction. In Fig. 3A and Fig. 3B, the plurality of feeding chambers include a first feeding chamber 40 and a second feeding chamber 41 as one example. The second feeding chamber 41 is adjacent to the first feeding chamber 40 and is disposed below the first feeding chamber 40.

The capacity of the first feeding chamber 40 is smaller than the capacity of the storage chamber 38. As one example, the capacity of the first feeding chamber 40 according to the present embodiment is smaller than the capacity of the second feeding chamber 41. Specifically, the ratio between the capacity of the first feeding chamber 40 and the capacity of the second feeding chamber 41 is 1:3 as one example. That is, the capacity of the first feeding chamber 40 is 1/3 of the capacity of the second feeding chamber 41. However, the ratio between the capacity of the first feeding chamber 40 and the capacity of the second feeding chamber 41 is not limited to this ratio.

Referring to Fig. 3A and Fig. 3B, the inlet shutter 34 is an opening and closing shutter configured to open and close an inlet opening 42 for feeding the powder in the storage chamber 38 to the feeding member 32. Specifically, the inlet shutter 34 is inserted into a first hole 45 of the feeding member 32 and moves linearly in the Y direction (one direction) and the -Y direction (the other direction) to open and close the inlet opening 42.

The outlet shutter 35 is an opening and closing shutter configured to open and close an outlet opening 43 for feeding powder in the feeding member 32 to the discharge port 39. Specifically, the outlet shutter 35 is inserted into a second hole 46 of the feeding member 32 and moves linearly in the Y direction and the -Y direction to open and close the outlet opening 43.

Opening the inlet shutter 34 with the outlet shutter 35 closed can charge the feeding member 32 with the powder in the storage chamber 38. Meanwhile, opening the outlet shutter 35 with the inlet shutter 34 closed can discharge the powder in the feeding member 32 through the discharge port 39.

As seen from the above, the powder supply apparatus 30 according to the present embodiment can make it easy to discharge a certain amount (a given amount) of powder through the discharge port 39 (i.e., can make it easy to supply the certain amount of powder).

The intermediate shutter 36 is an opening and closing shutter configured to open and close an intermediate opening 44 that makes one of the adjacent feeding chambers out of the plurality of feeding chambers (the first feeding chamber 40) and the other feeding chamber (the second feeding chamber 41) communicate with each other. Specifically, the intermediate shutter 36 is inserted into a third hole 47 of the feeding member 32 and moves linearly in the Y direction and the -Y direction to open and close the intermediate opening 44.

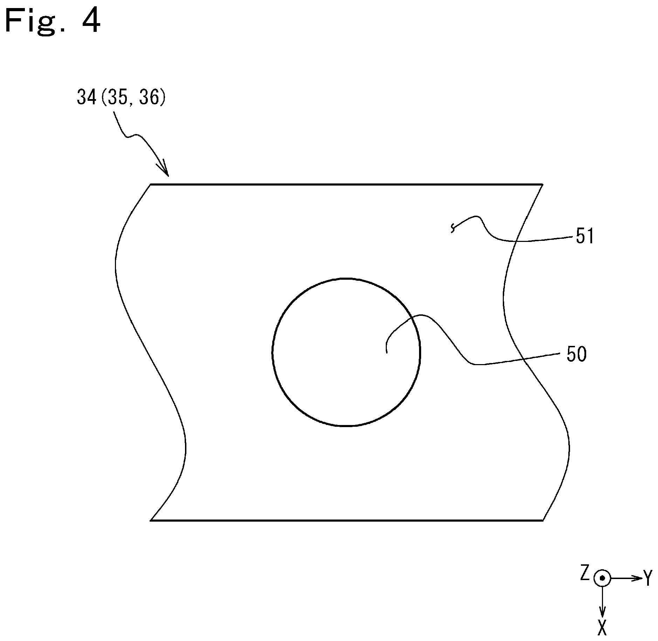

Fig. 4 is a schematic plan view of parts of the inlet shutter 34, the outlet shutter 35, and the intermediate shutter 36. As one example, the inlet shutter 34, the outlet shutter 35, and the intermediate shutter 36 according to the present embodiment each have a through hole 50 and a screen portion 51 that is provided around the through hole 50.

The through holes 50 are provided to penetrate the shutters in the up-down direction. Although the shape of the through hole 50 illustrated in Fig. 4 is circular as one example, it is not limited to this. For example, the through holes 50 may have a shape with corner portions (a quadrilateral) or another shape.

Making the through hole 50 of the shutter communicate with the inlet opening 42, the outlet opening 43, or the intermediate opening 44 can bring the inlet opening 42, the outlet opening 43, or the intermediate opening 44 into an opened state (i.e., "open"). Meanwhile, making the screen portion 51 of the shutter close the inlet opening 42, the outlet opening 43, or the intermediate opening 44 can bring the inlet opening 42, the outlet opening 43, or the intermediate opening 44 into a closed state (i.e., "close").

Note that the configuration illustrated in Fig. 4 mentioned above is merely an example of the shutters. The configuration of the shutters is not limited to the configuration illustrated in Fig. 4 as long as the inlet opening 42, the outlet opening 43, or the intermediate opening 44 can be opened and closed. Any known shutters capable of opening and closing the openings can be used.

When powder is stored in the storage chamber 38 to begin with, the inlet shutter 34 is closed, and then, powder is stored in the storage chamber 38. When the inlet shutter 34 is opened to open the inlet opening 42, powder in the storage chamber 38 is fed into the feeding member 32 (specifically, the first feeding chamber 40) by the action of gravity, and the first feeding chamber 40 is charged with the powder. When the intermediate shutter 36 is opened to open the intermediate opening 44, the powder in the first feeding chamber 40 is fed into the second feeding chamber 41 by the action of gravity. When the outlet shutter 35 is opened to open the outlet opening 43, the powder in the second feeding chamber 41 is fed into the discharge port 39 by the action of gravity and discharged through the discharge port 39 (i.e., the powder is supplied through the discharge port 39 to the fabrication areas 5a and 5b).

Referring to Fig. 2, the driver 37a is a device for driving the inlet shutter 34. Specifically, receiving instructions from the controller 10, the driver 37a causes the inlet shutter 34 to move linearly in the Y direction and the -Y direction. The driver 37b is a device for driving the outlet shutter 35. Specifically, receiving instructions from the controller 10, the driver 37b causes the outlet shutter 35 to move linearly in the Y direction and the -Y direction. The driver 37c is a device for driving the intermediate shutter 36. Specifically, receiving instructions from the controller 10, the driver 37c causes the intermediate shutter 36 to move linearly in the Y direction and the -Y direction.

According to the present embodiment, the first feeding chamber 40 and the second feeding chamber 41 are provided inside the feeding member 32, and the intermediate shutter 36 is provided between the first feeding chamber 40 and the second feeding chamber 41, as mentioned above. Thus, the amount of powder to be discharged through the discharge port 39 can be easily adjusted by opening and closing the inlet shutter 34, the intermediate shutter 36, and the outlet shutter 35 separately.

Specifically, the controller 10 according to the present embodiment controls the operation of opening and closing the inlet shutter 34, the outlet shutter 35, and the intermediate shutter 36 such that powder in the storage chamber 38 is fed into at least one feeding chamber selected from among the plurality feeding chambers (this will be referred to as a "charging chamber") to charge the charging chamber with the powder and then the powder in at least one feeding chamber selected from among the charging chamber (this will be referred to as a "discharging chamber") is discharged through the discharge port 39.

More specifically, in the case where the charging chamber is charged with powder in the storage chamber 38, the controller 10 opens the inlet shutter 34, closes the outlet shutter 35, and opens or closes the intermediate shutter 36 to make the storage chamber 38 and the charging chamber communicate with each other, thus charging the charging chamber with powder in the storage chamber 38.

In the case where powder in the discharging chamber is discharged through the discharge port 39, the controller 10 closes the inlet shutter 34, opens the outlet shutter 35, and opens or closes the intermediate shutter 36 to make the discharging chamber and the discharge port 39 communicate with each other, thus discharging powder in the discharging chamber through the discharge port 39.

In addition, the controller 10 can control the inlet shutter 34, the outlet shutter 35, and the intermediate shutter 36 in accordance with the amount of powder to be discharged through the discharge port 39.

Specifically, the controller 10 according to the present embodiment controls the inlet shutter 34, the outlet shutter 35, and the intermediate shutter 36 such that the amount of powder to be discharged through the discharge port 39 becomes one discharge amount selected from among a "first amount (m³)," a "second amount (m³)" smaller than the first amount, and a "third amount (m³)" smaller than the second amount. In other words, the first amount, the second amount, and the third amount correspond to a "large amount," a "medium amount," and a "small amount," respectively.

In the present embodiment, the first amount is a value corresponding to the total volume of powder with which the first feeding chamber 40 and the second feeding chamber 41 are charged. The second amount is a value corresponding to the volume of powder with which only the second feeding chamber 41 is charged. The third amount is a value corresponding to the volume of powder with which only the first feeding chamber 40 is charged.

Specifically, in the case where the first amount is set as the amount of powder to be discharged through the discharge port 39, the controller 10 makes the first feeding chamber 40 and the second feeding chamber 41 serve as the charging chamber and the discharging chamber. In the case where the second amount is set as the amount of powder to be discharged through the discharge port 39, the controller 10 makes the first feeding chamber 40 and the second feeding chamber 41 serve as the charging chamber and makes the second feeding chamber 41 serve as the discharging chamber. In the case where the third amount is set as the amount of powder to be discharged through the discharge port 39, the controller 10 makes the first feeding chamber 40 serve as the charging chamber and the discharging chamber.

More specifically, the controller 10 opens and closes the inlet shutter 34, the outlet shutter 35, and the intermediate shutter 36 as shown in Table 1.

**[Table 1]**

| Discharge amount | Charging | | | Discharging | | |
|---|---|---|---|---|---|---|
| | Inlet shutter | Intermediate shutter | Outlet shutter | Inlet shutter | Intermedia te shutter | Outlet shutter |
| First amount | Open | Open | Close | Close | Open | Open |
| Second amount | Open | Open | Close | Close | Close | Open |
| Third amount | Open | Close | Close | Close | Open | Open |

That is, in the case where the first amount is set as the amount of powder to be discharged through the discharge port 39, the controller 10 charges the first feeding chamber 40 and the second feeding chamber 41 (the "charging chamber") with powder in the storage chamber 38 by opening the inlet shutter 34, opening the intermediate shutter 36, and closing the outlet shutter 35 for a given time that is set in advance. Note that, as this given time, a value greater than or equal to the time it takes to charge the first feeding chamber 40 and the second feeding chamber 41 with powder can be used. The given time only needs to be determined in advance through an experiment or the like and stored in the storage 12.

The controller 10 next closes the inlet shutter 34, opens the intermediate shutter 36, and opens the outlet shutter 35 for a given time that is set in advance. The powder in the first feeding chamber 40 and the second feeding chamber 41 (the "discharging chamber") is discharged through the discharge port 39 in this manner. Thus, the first amount of the powder can be discharged through the discharge port 39. Note that, as this given time, a value greater than or equal to the time it takes to discharge the powder in the first feeding chamber 40 and the second feeding chamber 41 through the discharge port 39 can be used. The given time also only needs to be determined in advance through an experiment or the like and stored in the storage 12.

In the case where the second amount is set as the amount of powder to be discharged through the discharge port 39, the controller 10 charges the first feeding chamber 40 and the second feeding chamber 41 (the "charging chamber") with powder in the storage chamber 38 by opening the inlet shutter 34, opening the intermediate shutter 36, and closing the outlet shutter 35 for a given time that is set in advance.

The controller 10 next discharges only the powder in the second feeding chamber 41 (the "discharging chamber") through the discharge port 39 by closing the inlet shutter 34, closing the intermediate shutter 36, and opening the outlet shutter 35 for a given time that is set in advance. Thus, the second amount of the powder is discharged through the discharge port 39. Note that, as this given time, a value greater than or equal to the time it takes to discharge the powder in the second feeding chamber 41 through the discharge port 39 can be used. The given time only needs to be determined in advance through an experiment or the like and stored in the storage 12.

In the case where the third amount is set as the amount of powder to be discharged through the discharge port 39, the controller 10 charges the first feeding chamber 40 (the "charging chamber") with powder in the storage chamber 38 by opening the inlet shutter 34, closing the intermediate shutter 36, and closing the outlet shutter 35 for a given time that is set in advance. Note that, as this given time, a value greater than or equal to the time it takes to charge the first feeding chamber 40 with the powder can be used. The given time only needs to be determined in advance through an experiment or the like and stored in the storage 12.

The controller 10 next discharges the powder in the first feeding chamber 40 (the "discharging chamber") through the discharge port 39 by closing the inlet shutter 34, opening the intermediate shutter 36, and opening the outlet shutter 35 for a given time that is set in advance. Thus, the third amount of the powder is discharged through the discharge port 39. Note that, as this given time, a value greater than or equal to the time it takes to discharge the powder in the first feeding chamber 40 through the discharge port 39 can be used. The given time only needs to be determined in advance through an experiment or the like and stored in the storage 12.

According to the present embodiment as described above, the amount of powder to be discharged through the discharge port 39 can be easily adjusted by opening and closing the inlet shutter 34, the outlet shutter 35, and the intermediate shutter 36 separately.

Note that the powder supply apparatus 30 according to the present embodiment can be attached to an existing additive manufacturing apparatus (a conventional additive manufacturing apparatus) for use. Specifically, the powder supply apparatus 30 according to the present embodiment can be substituted for a conventional powder supply apparatus included in the existing additive manufacturing apparatus for use. In this manner, it is possible to easily improve the existing additive manufacturing apparatus to the additive manufacturing apparatus 1 according to the present embodiment.

### (Modification 1 of Embodiment)

In the above-mentioned embodiment, the capacity of the first feeding chamber 40 is smaller than the capacity of the second feeding chamber 41. However, it is not limited to this configuration. The capacity of the first feeding chamber 40 may be larger than the capacity of the second feeding chamber 41.

Even in the case where the capacity of the first feeding chamber 40 is larger than the capacity of the second feeding chamber 41 as in the present modification, the controller 10 can set the first amount, the second amount (this is smaller than the first amount), and the third amount (this is smaller than the second amount) as the amount of powder to be discharged through the discharge port 39.

Specifically, in the case where the first amount is set as the amount of powder to be discharged through the discharge port 39, the controller 10 according to the present modification makes the first feeding chamber 40 and the second feeding chamber 41 serve as the charging chamber and the discharging chamber. In the case where the second amount is set as the amount of powder to be discharged through the discharge port 39, the controller 10 makes the first feeding chamber 40 serve as the charging chamber and the discharging chamber. In the case where the third amount is set as the amount of powder to be discharged through the discharge port 39, the controller 10 makes the first feeding chamber 40 and the second feeding chamber 41 serve as the charging chamber and makes the second feeding chamber 41 serve as the discharging chamber.

More specifically, the controller 10 according to the present modification only needs to control the inlet shutter 34, the intermediate shutter 36, and the outlet shutter 35 as shown in Table 2.

**[Table 2]**

| Discharge amount | Charging | | | Discharging | | |
|---|---|---|---|---|---|---|
| | Inlet shutter | Intermedia te shutter | Outlet shutter | Inlet shutter | Intermedia te shutter | Outlet shutter |
| First amount | Open | Open | Close | Close | Open | Open |
| Second amount | Open | Close | Close | Close | Open | Open |
| Third amount | Open | Open | Close | Close | Close | Open |

That is, in the case where the first amount is set as the amount of powder to be discharged through the discharge port 39, the controller 10 charges the first feeding chamber 40 and the second feeding chamber 41 (the "charging chamber") with powder in the storage chamber 38 by opening the inlet shutter 34, opening the intermediate shutter 36, and closing the outlet shutter 35 for a given time that is set in advance. The controller 10 next closes the inlet shutter 34, opens the intermediate shutter 36, and opens the outlet shutter 35 for a given time that is set in advance. The powder in the first feeding chamber 40 and the second feeding chamber 41 (the "discharging chamber") is discharged through the discharge port 39 in this manner. Thus, the first amount of the powder can be discharged through the discharge port 39.

In the case where the second amount is set as the amount of powder to be discharged through the discharge port 39, the controller 10 charges the first feeding chamber 40 (the "charging chamber") with powder in the storage chamber 38 by opening the inlet shutter 34, closing the intermediate shutter 36, and closing the outlet shutter 35 for a given time that is set in advance. The controller 10 next discharges the powder in the first feeding chamber 40 (the "discharging chamber") through the discharge port 39 by closing the inlet shutter 34, opening the intermediate shutter 36, and opening the outlet shutter 35 for a given time that is set in advance. Thus, the second amount of the powder is discharged through the discharge port 39.

In the case where the third amount is set as the amount of powder to be discharged through the discharge port 39, the controller 10 charges the first feeding chamber 40 and the second feeding chamber 41 (the "charging chamber") with powder in the storage chamber 38 by opening the inlet shutter 34, opening the intermediate shutter 36, and closing the outlet shutter 35 for a given time that is set in advance. The controller 10 next discharges only the powder in the second feeding chamber 41 (the "discharging chamber") through the discharge port 39 by closing the inlet shutter 34, closing the intermediate shutter 36, and opening the outlet shutter 35 for a given time that is set in advance. Thus, the third amount of the powder is discharged through the discharge port 39.

Note that, in the embodiment and Modification 1 of the embodiment mentioned above, the inside of the feeding member 32 may be partitioned into three or more feeding chambers. To give one example of this, the feeding member 32 may be internally provided with a "third feeding chamber (this is disposed below the second feeding chamber 41)" in addition to the first feeding chamber 40 and the second feeding chamber 41, for example. In this case, a "second intermediate shutter" that opens and closes a "second intermediate opening" to make the second feeding chamber 41 and the third feeding chamber communicate with each other only needs to be further included.

In the embodiment and Modification 1 of the embodiment mentioned above, the controller 10 controls the operation of opening and closing the shutters. However, the operation is not limited to this configuration. For example, the operation of opening and closing the shutters may be performed manually.

### (Modification 2 of Embodiment)

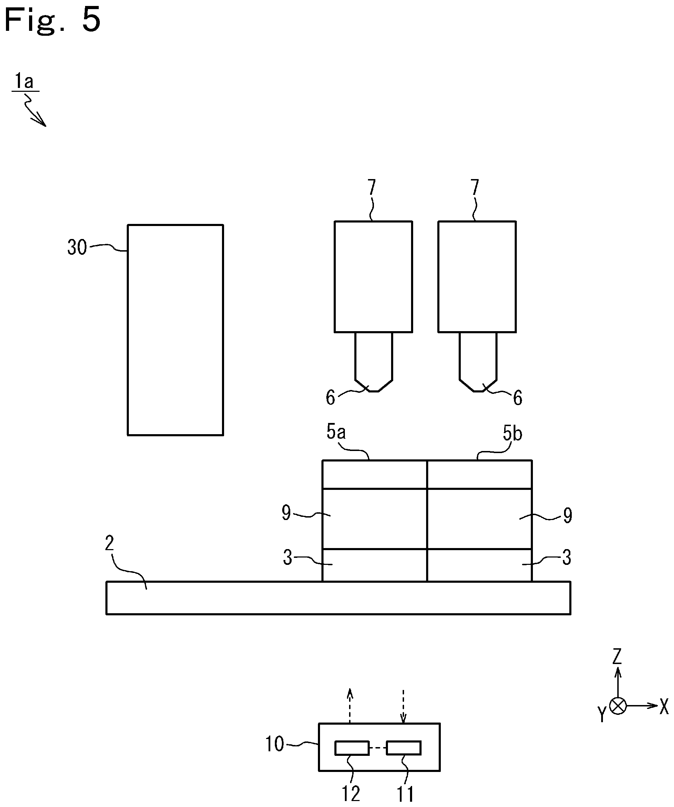

An additive manufacturing apparatus to which the powder supply apparatus 30 is applied is not limited to the additive manufacturing apparatus illustrated in Fig. 1A and Fig. 1B. Fig. 5 is a schematic diagram for describing an additive manufacturing apparatus 1a according to Modification 2 of the embodiment. As one example, in the additive manufacturing apparatus 1a according to the present modification, two second traveling shafts 3 are disposed on the first traveling shaft 2. On the respective second traveling shafts 3, lifting shafts 9 are disposed. On one lifting shaft 9 of the two lifting shafts 9, the fabrication area 5a is provided, and on the other lifting shaft 9, the fabrication area 5b is provided.

The lifting shafts 9 are devices for raising and lowering the fabrication areas 5a and 5b in the up-down direction (the Z direction and the -Z direction). Above the fabrication area 5a and the fabrication area 5b, the nozzles 6 are disposed, respectively. There are spaces provided between the nozzles 6 and the fabrication areas 5a and 5b. The nozzles 6 are supplied with material from the material suppliers 7. The nozzles 6 eject the material for the three-dimensional object into the fabrication areas 5a and 5b and irradiate the ejected material with a beam to melt the material.

The additive manufacturing apparatus 1a as described above fabricates the three-dimensional object in the fabrication areas 5a and 5b while causing the fabrication areas 5a and 5b to travel in the X direction, the -X direction, the Y direction, the -Y direction, the Z direction, and the -Z direction on the basis of three-dimensional data stored in the controller 10.

The powder supply apparatus 30 according to the present modification is disposed on a side (in the -X direction as one example) of the nozzles 6 of the additive manufacturing apparatus 1a. The powder supply apparatus 30 according to the present modification is fixed to the additive manufacturing apparatus 1a at a given location with a given support member (not illustrated).

The powder supply apparatus 30 according to the present modification also supplies, during a given period, powder to the fabrication areas 5a and 5b to lay the powder on the fabrication areas 5a and 5b as with the powder supply apparatus 30 according to the embodiment mentioned above with reference to Fig. 1A and Fig. 1B. To give one example of this, the powder supply apparatus 30 according to the present modification may also lay powder on the fabrication areas 5a and 5b every time the additive manufacturing apparatus 1a fabricates one layer of the three-dimensional object.

Note that, when the powder supply apparatus 30 supplies powder to the fabrication areas 5a and 5b, the second traveling shafts 3 travel in the -X direction along the first traveling shafts 2 to position the fabrication areas 5a and 5b below the discharging member 33 of the powder supply apparatus 30. Thus, the powder supply apparatus 30 can supply the powder discharged through the discharging member 33 to the fabrication areas 5a and 5b.

The embodiment and the modifications of the present invention have been described above in detail. However, the present invention is not limited to such specific embodiment and modifications. Various modifications and alterations may be made within the scope of the present invention as described in the claims.

### REFERENCE SIGNS LIST

- 1: additive manufacturing apparatus
- 10: controller
- 30: powder supply apparatus
- 31: storage member
- 32: feeding member
- 33: discharging member
- 34: inlet shutter
- 35: outlet shutter
- 36: intermediate shutter
- 38: storage chamber
- 39: discharge port
- 40: first feeding chamber
- 41: second feeding chamber
- 42: inlet opening
- 43: outlet opening
- 44: intermediate opening

## Claims

1. A powder supply apparatus comprising:
a storage member including a storage chamber configured to store powder;
a discharging member disposed below the storage member and including a discharge port to discharge the powder;
a feeding member disposed below the storage member and above the discharging member, configured to feed powder in the storage chamber to the discharge port, and including a plurality of feeding chambers inside the feeding member such that the plurality of feeding chambers are stacked in an up-down direction, the plurality of feeding chambers having capacities different from one another;
an inlet shutter configured to open and close an inlet opening for feeding the powder in the storage chamber to the feeding member;
an outlet shutter configured to open and close an outlet opening for feeding powder in the feeding member to the discharge port; and
an intermediate shutter configured to open and close an intermediate opening that makes one feeding chamber and another feeding chamber communicate with each other, the one feeding chamber and the other feeding chamber being included in the plurality of feeding chambers and being adjacent to each other.

2. The powder supply apparatus according to claim 1, comprising
a controller configured to control operation of opening and closing the inlet shutter, the outlet shutter, and the intermediate shutter, wherein
the controller controls the inlet shutter, the outlet shutter, and the intermediate shutter such that, after a charging chamber is charged with the powder in the storage chamber, powder in a discharging chamber is discharged through the discharge port, the charging chamber being at least one feeding chamber selected from among the plurality of feeding chambers, the discharging chamber being at least one feeding chamber selected from among the charging chamber.

3. The powder supply apparatus according to claim 2, wherein
in a case where the charging chamber is to be charged with the powder in the storage chamber, the controller charges the charging chamber with the powder in the storage chamber by opening the inlet shutter, closing the outlet shutter, and opening or closing the intermediate shutter to make the storage chamber and the charging chamber communicate with each other, and
in a case where the powder in the discharging chamber is to be discharged through the discharge port, the controller discharges the powder in the discharging chamber through the discharge port by closing the inlet shutter, opening the outlet shutter, and opening or closing the intermediate shutter to make the discharging chamber and the discharge port communicate with each other.

4. The powder supply apparatus according to claim 3, wherein
the plurality of feeding chambers include a first feeding chamber and a second feeding chamber, the second feeding chamber being adjacent to the first feeding chamber and being disposed below the first feeding chamber, and
the controller controls the inlet shutter, the outlet shutter, and the intermediate shutter such that the powder is discharged through the discharge port in one discharge amount selected from among a first amount, a second amount, and a third amount, the second amount being smaller than the first amount, the third amount being smaller than the second amount.

5. The powder supply apparatus according to claim 4, wherein
a capacity of the first feeding chamber is smaller than a capacity of the second feeding chamber,
in a case where the first amount is set as an amount of powder to be discharged through the discharge port, the controller makes the first feeding chamber and the second feeding chamber serve as the charging chamber and the discharging chamber,
in a case where the second amount is set as the amount of the powder to be discharged through the discharge port, the controller makes the first feeding chamber and the second feeding chamber serve as the charging chamber and makes the second feeding chamber serve as the discharging chamber, and
in a case where the third amount is set as the amount of the powder to be discharged through the discharge port, the controller makes the first feeding chamber serve as the charging chamber and the discharging chamber.

6. The powder supply apparatus according to claim 4, wherein
a capacity of the first feeding chamber is larger than a capacity of the second feeding chamber,
in a case where the first amount is set as an amount of powder to be discharged through the discharge port, the controller makes the first feeding chamber and the second feeding chamber serve as the charging chamber and the discharging chamber,
in a case where the second amount is set as the amount of the powder to be discharged through the discharge port, the controller makes the first feeding chamber serve as the charging chamber and the discharging chamber, and
in a case where the third amount is set as the amount of the powder to be discharged through the discharge port, the controller makes the first feeding chamber and the second feeding chamber serve as the charging chamber and makes the second feeding chamber serve as the discharging chamber.

7. The powder supply apparatus according to claim 1, wherein
the powder supply apparatus is configured to be applied to an additive manufacturing apparatus including a fabrication area and to supply the powder to the fabrication area, the fabrication area being a fabrication area in which a three-dimensional object is to be fabricated.
